# EUROPÄISCHE PATENTANMELDUNG

(11) **EP 2 685 343 A1**
(43) Veröffentlichungstag der Anmeldung: **15.01.2014**
(21) Anmeldenummer: 12176236.3
(22) Anmeldetag: 12.07.2012
(51) Int. Cl.: G06F 1/16, H04B 1/38

(54) **Aufnahmevorrichtung für ein Mobilendgerät**

(71) Anmelder: Schmid, Rene, 8618 Oetwil am See (CH)
(72) Erfinder: Schmid, Rene, 8618 Oetwil am See (CH)
(74) Vertreter: Rutz & Partner

(57) **Zusammenfassung**

Die Aufnahmevorrichtung (1) umfasst einen ersten Aufnahmebehälter (10), der zur Aufnahme von Nutzgegenständen, insbesondere Kreditkarten (8) dient, und einen zweiten Aufnahmebehälter (20), der zur Aufnahme eines Mobilendgeräts (2) dient. Erfindungsgemäss ist ein Vorrichtungskörper (100) vorgesehen, der einstückig aus Kunststoff gefertigt ist und eine Trennwand (13) mit einem peripheren Rand aufweist, an den ein gegen die Rückseite der Aufnahmevorrichtung (1) gerichtetes erstes Wandelement (11) anschliesst, das den ersten Aufnahmebehälter (10) seitlich umschliesst und an parallel zu einander verlaufenden Wandseiten endseitig je eine Nut (118A, 118b) zur Führung eines Deckels (19) aufweist, mittels dessen der erste Aufnahmebehälter (10) abschliessbar ist, und an den ein gegen die Frontseite der Aufnahmevorrichtung (1) gerichtetes, gegebenenfalls in Segmente aufgeteiltes oder mit Ausnehmungen (121, 122, 123) versehenes zweites Wandelement (12) anschliesst, das den zweiten Aufnahmebehälter (20) begrenzt, das mit dem ersten Wandelement (11) eine gemeinsame Aussenwand bildet und das klammerförmig ausgestaltet ist.

## Beschreibung

Die Erfindung betrifft eine Aufnahmevorrichtung für ein Mobilendgerät, insbesondere ein Mobiltelefon, nach dem Oberbegriff des Patentanspruchs 1.

Mobiltelefone sind heute weit verbreitet und erlauben es dem Anwender, praktisch an jedem beliebigen Standort Gesprächsverbindungen aufzubauen, weshalb sie zumeist mitgetragen werden. Ebenso werden heute oft auch Kreditkarten mitgeführt, um bargeldlos Einkäufe tätigen zu können.

Da das Mobiltelefon stets griffbereit ist, Kreditkarten hingegen typischerweise in einer Brieftasche abgelegt und nicht leicht erreichbar sind, wurde in der Offenlegungsschrift US 2007/0057004 Al eine Vorrichtung vorgeschlagen, die einerseits zur Aufnahme eines Mobiltelefons und andererseits zur Aufnahme von Kreditkarten geeignet ist. Diese Aufnahmevorrichtung ist hingegen voluminös, aufwändig gestaltet und zudem unvorteilhaft in der Handhabung.

Der vorliegenden Erfindung liegt daher die Aufgabe zugrunde, eine verbesserte Aufnahmevorrichtung für Mobilendgeräte und weitere Nutzgegenstände zu schaffen.

Insbesondere ist eine Aufnahmevorrichtung zu schaffen, die wenig Raum in Anspruch nimmt, leicht handhabbar ist und zudem kostengünstig hergestellt werden kann.

Diese Aufgabe wird mit einer Aufnahmevorrichtung gelöst, welche die in Anspruch 1 angegebenen Merkmale aufweist. Vorteilhafte Ausgestaltungen der Erfindung sind in weiteren Ansprüchen angegeben.

Die erfindungsgemässe Aufnahmevorrichtung umfasst einen ersten Aufnahmebehälter, der zur Aufnahme von Nutzgegenständen, wie Kreditkarten, Identitätskarten, Parkscheinen, oder Banknoten, dient, und einen zweiten Aufnahmebehälter, der zur Aufnahme eines Mobilendgeräts dient. Erfindungsgemäss ist ein Vorrichtungskörper vorgesehen, der einstückig aus Kunststoff gefertigt ist und eine Trennwand mit einem peripheren Rand aufweist, an den ein gegen die Rückseite der Aufnahmevorrichtung gerichtetes erstes Wandelement anschliesst, das den ersten Aufnahmebehälter seitlich umschliesst und an parallel zu einander verlaufenden Wandseiten je eine Nut zur Führung eines Deckels aufweist, mittels dessen der erste Aufnahmebehälter abschliessbar ist. An den peripheren Rand der Trennwand schliesst ferner ein gegen die Frontseite der Aufnahmevorrichtung gerichtetes, gegebenenfalls in Segmente aufgeteiltes oder mit Ausnehmungen versehenes zweites Wandelement an, das den zweiten Aufnahmebehälter begrenzt, das mit dem ersten Wandelement eine gemeinsame Aussenwand bildet und das klammerförmig ausgestaltet ist.

Die Aufnahmevorrichtung ist kompakt aufgebaut und unterscheidet sich in den Abmessungen nur wenig vom Mobilendgerät. Die Höhe des ersten Wandelements liegt vorzugsweise im Bereich von 3mm bis 15mm. In Ausgestaltungen mit geringen Wandhöhen von z.B. 3m-5mm unterscheidet sich die erfindungsgemässe Aufnahmevorrichtung mit einem eingesetzten Mobilendgerät kaum von einer Schutzhülle mit einem eingesetzten Mobilendgerät. Die erfindungsgemässe Aufnahmevorrichtung dient dabei jedoch nicht nur als Schutzhülle, sondern erlaubt es, die wichtigsten Utensilien des Anwenders, insbesondere Kreditkarten, Bargeld, Medikamente, Parktickets und Schlüssel, zu speichern.

Die Aufnahmevorrichtung ist dabei derart aufgebaut, dass die erste Aufnahmevorrichtung übergangslos an die zweite Aufnahmevorrichtung anschliesst, weshalb der Eindruck gewahrt bleibt, dass lediglich eine Schutzhülle für das Mobilendgerät vorliegt. Der Vorrichtungskörper wird vorzugsweise aus einem robusten und belastungsfähigen Kunststoff, wie einem Polycarbonat oder einem Acrylnitril-Butadien-StyrolCopolymerisat gefertigt. Der Kunststoff weist vorzugsweise eine Elastizität auf, die es erlaubt, das zweite Wandelement oder Segmente davon beim Einsetzen des Mobilendgeräts nach aussen zu biegen, so dass diese anschliessend das eingesetzte Mobilendgerät umklammern und zuverlässig halten. Die Dimensionen des zweiten Aufnahmebehälters sind daher vorzugsweise präzise an das Mobilendgerät angepasst.

In vorzugsweisen Ausgestaltungen ist hingegen ein ein- oder mehrteiliger Zwischenadapter vorgesehen, dessen Aussenseite an den zweiten Aufnahmebehälter und dessen Innenseite an das Mobilendgerät angepasst ist. Beispielsweise werden Eckelemente vorgesehen, mittels denen ein Abstand überbrückt wird.

Besonders vorteilhaft ist die Verwendung eines einschiebbaren Deckels, welcher von Aufnahmenuten aufgenommen wird, welche an parallel zu einander verlaufenden Wandseiten des ersten Wandelements vorgesehen sind. Die Aufnahmevorrichtung ist daher leicht zu handhaben. Der Deckel kann durch Druck zum Beispiel des Daumens gelöst und vorzugsweise bis zu einem Anschlag nach aussen geschoben werden.

In vorzugsweisen Ausgestaltungen sind Rastelemente vorgesehen, mittels denen der Deckel wenigstens in einer Öffnungsposition fixiert werden kann. Vorzugsweise werden Rastelemente vorgesehen, welche eine von einer Feder gestützte Kugel umfassen, die in der betreffenden Öffnungsposition in eine im Deckel vorgesehene Vertiefung eingreift. Der Deckel wird an der Unterseite vorzugsweise zudem mit Blockierelementen versehen, welche mit Anschlagsleisten zusammenwirken, die im Bereich der zylindrischen Elemente innerhalb des Aufnahmebehälters angeordnet sind. Auf diese Weise wird verhindert, dass der Deckel vollständig vom Vorrichtungskörper gelöst werden kann.

In einer weiteren bevorzugten Ausgestaltung weist der Deckel auf der dem Vorrichtungskörper zugewandten Seite eine Ausnehmung z.B. für eine Kreditkarte oder ein Parkticket, und vorzugsweise ein Halteelement, wie eine Zunge, auf, mittels der die Kreditkarte und/oder das Parkticket fixerbar ist. Die Kreditkarte ist somit immer an demselben Ort sicher gehalten und optimal geschützt. Ferner ist die in der Ausnehmung des Deckels gehaltene Kreditkarte maximal vom Mobilendgerät entfernt, so dass störende Einwirkungen vom Mobilendgerät, wie das Löschen von Informationen auf dem Magnetstreifen, vermieden werden. In dieser vorteilhaften Ausgestaltung kann die Ausnehmung im Deckel gleichzeitig den ersten Aufnahmebehälter bilden, weshalb die Höhe des ersten Wandelements auf ein Minimum bzw. auf die erforderlichen Führungsnuten reduziert werden kann. Diese Ausgestaltung erlaubt es ferner, die Ausnehmung im Deckel bzw. den ersten Aufnahmebehälter dicht abzuschliessen. Der an die Ausnehmung anschliessende Rand des Deckels kann nämlich dicht an der Trennwand anliegen. Die Ausnehmung im Deckel kann ferner an eine Schlitzöffnung anschliessen, durch die die Kreditkarte oder das Parkticket in den Deckel eingeschoben wird. Nach Gebrauch der Kreditkarte wird diese in den Schlitz eingeschoben und kann nur dann wieder entnommen werden, wenn der Deckel geöffnet wird. Die Handhabung der Vorrichtung und der Gegenstände wird dadurch deutlich erleichtert.

Die Aufnahmevorrichtung ist vorzugsweise derart ausgestaltet, dass das erste Wandelement im Bereich einer Ecke des Vorrichtungskörpers innerhalb des Querschnitts der Trennwand verläuft, so dass ein an eine Öffnung in der Trennwand anschliessende Ausnehmung freigehalten wird, durch die Licht zur Öffnung gelangen kann. Der Lichteinfall zum Kameraobjektiv des Mobilendgeräts, welches vor dieser Öffnung positioniert ist, wird durch das erste Wandelement des ersten Aufnahmebehälters somit nicht beeinträchtigt. Zu diesem Zweck wird der Vorrichtungskörper vorzugsweise auch aus einem dunklen, vorzugsweise schwarzen Material gefertigt, welches Licht kaum reflektiert.

Das erste Wandelement verläuft entlang einer in sich geschlossenen Kurve und schliesst den ersten Aufnahmebehälter seitlich und gegen die Trennwand dicht ab. Das zweite Wandelement kann ebenfalls entlang einer in sich geschlossenen Kurve verlaufen, wobei der Zugang zu Bedienungselementen und Anschlusselementen des Mobilendgeräts durch Öffnungen im zweiten Wandelement gewährleistet werden kann. Alternativ wird das zweite Wandelement in Segmente aufgeteilt oder mit Ausnehmungen für die Bedienungselemente und Anschlusselemente des Mobilendgeräts versehen werden. Vereinzelte Segmente des zweiten Wandelements weisen eine erhöhte Elastizität auf, weshalb diese leichter gebogen werden können und das Mobilendgerät mit reduzierter Kraft in den zweiten Aufnahmebehälter eingesetzt werden kann.

Die klammerartige Ausgestaltung des zweiten Wandelements bzw. der Segmente davon erfolgt vorzugsweise durch Anformung eines Flansches oder einer Verdickung an dem der Trennwand abgewandten Ende der Segmente.

Zur Vermeidung störender Interaktionen zwischen Gegenständen, die im ersten Aufnahmebehälter gelagert sind, und dem Mobilendgerät wird die Trennwand vorzugsweise mit einem metallischen Abschirmelement versehen. Durch das metallische Abschirmelement soll insbesondere verhindert werden, dass Informationen auf Magnetstreifen von Kreditkarten oder Parktickets gelöscht werden, die im ersten Aufnahmebehälter gelagert sind. Wie erwähnt, werden Interaktionen reduziert, wenn die Kreditkarte oder das Parkticket beabstandet in der vorzugsweise vorgesehenen Ausnehmung im Deckel versorgt wird.

Das wenigstens eine Abschirmelement wird in einer ersten vorzugsweisen Ausgestaltung als Metallplatte oder Metallfolie vorgesehen, welche auf der einen oder anderen Seite der Trennwand angeordnet oder darin integriert wird.

In einer besonders bevorzugten Ausgestaltung ist das Abschirmelement an der Position des Lautsprechers des Mobilendgeräts an der Trennwand angeordnet und mit Abmessungen versehen, welche den Abmessungen des Querschnitts des Lautsprechers entsprechen oder bis zu einem Faktor 4 grösser sind. Auf diese Weise werden magnetische Feldlinien des Lautsprechers durch das Abschirmelement gebündelt, ohne dass sie in den Innenraum des ersten Aufnahmebehälters eindringen können. Vorzugsweise besteht das Abschirmelement aus weichmagnetischem Material, insbesondere einer weichmagnetischen Nickel-Eisen-Legierung hoher magnetischer Permeabilität, wie Mu-Metall.

Auf diese Weise wird gewährleistet, dass störende Einwirkungen durch den Magneten des Lautsprechers vermieden werden, während elektromagnetische Wellen ungehindert passieren können. Der Empfang des Mobilendgeräts oder ein Datenaustausch des Mobilendgeräts mit einem Chip einer im ersten Aufnahmebehälter gelagerten Kreditkarte wird durch das Abschirmelement daher nicht behindert.

Die Trennwand kann mit Rippen, Klammern oder elastischen Elementen versehen sein, welche es erlauben, die eingelegten Gegenstände zu ordnen, zu halten oder nach aussen zu stossen, sobald der Deckel geöffnet wird. Dadurch gelingt es, die Gegenstände im ersten Aufnahmebehälter unter Kontrolle zu halten und leicht entnehmen zu können.

Nachfolgend wird die Erfindung anhand von Zeichnungen näher erläutert. Dabei zeigt:
- Fig. 1a-d: eine erfindungsgemässe Aufnahmevorrichtung 1 mit einem mittels eines Deckels 19 abgeschlossenen ersten Aufnahmebehälter 10 zur Aufnahme von Nutzgegenständen und einem zweiten Aufnahmebehälter 20, in dem ein Mobilendgerät 2 gehalten ist;
- Fig. 2a-b: die Aufnahmevorrichtung 1 der Figuren 1a-1d in zwei verschiedenen Lagen mit dem Mobilendgerät 2 nach oben ausgerichtet;
- Fig. 3: die Aufnahmevorrichtung 1 der Figuren 1a-1d nach der Entnahme des Mobilendgeräts 2 und mit geöffneten Deckel 19;
- Fig. 4: die Aufnahmevorrichtung 1 der Figuren 1a-1d mit Blick in den ersten Aufnahmebehälter 10;
- Fig. 4a: ein Rastelement 135, welches einen auf der Trennwand 13 aufgesetzten Aufnahmezylinder 1351, eine Spiralfeder 1352 und eine damit gestützte Kugel 1353 aufweist;
- Fig. 5: die Aufnahmevorrichtung 1 der Figuren 1a-1d mit einer Kreditkarte 8 im ersten Aufnahmebehälter 10 und dem Mobilendgerät 2 im zweiten Aufnahmebehälter 20;
- Fig. 5a: den Deckel 19 mit Rastelementen 195 und Blockierelementen 196;
- Fig. 5b: den Deckel 19 mit einer Ausnehmung 190, welche gegebenenfalls den ersten Aufnahmebehälter 10 bildet;
- Fig. 6a-d: den Vorrichtungskörper 100 aus verschiedenen Blickwinkeln;
- Fig. 7: den Vorrichtungskörper 100 mit Blick in den ersten Aufnahmebehälter 10, in dem ein Halteelement 119 vorgesehen ist, um das ein Tragriemen 5 geschlauft ist; und
- Fig. 8: den Vorrichtungskörper 100 mit Blick in den ersten Aufnahmebehälter 10, in dem am unteren Ende ein Schaumstoffelement 6 angeordnet ist.

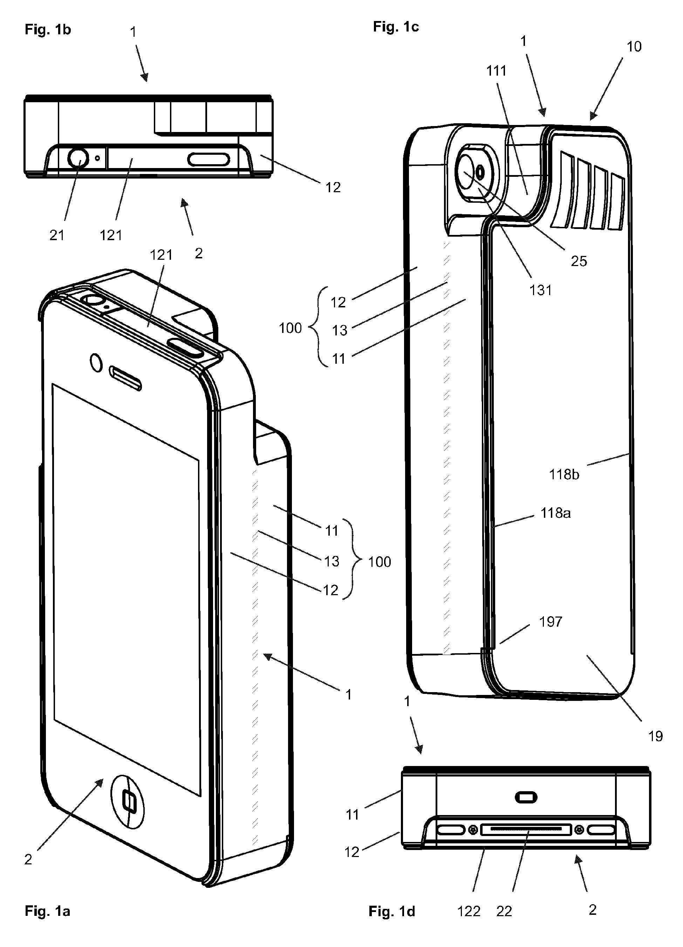

Die Figuren 1a, 1b, 1c und 1d zeigen eine erfindungsgemässe Aufnahmevorrichtung 1 mit einem mittels eines Deckels 19 abgeschlossenen ersten Aufnahmebehälter 10 zur Aufnahme von Nutzgegenständen und einem zweiten Aufnahmebehälter 20, in dem ein Mobilendgerät 2 gehalten ist.

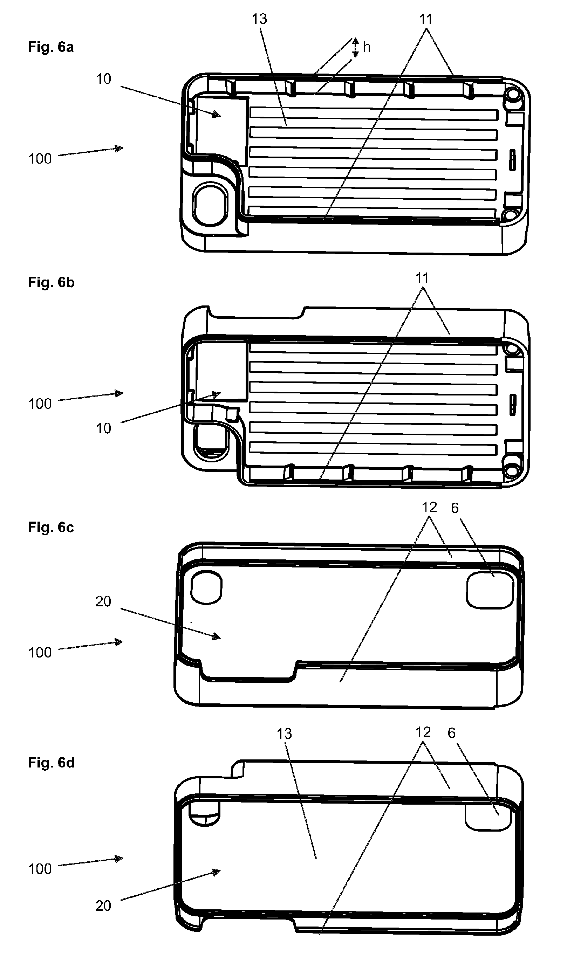

Die Aufnahmevorrichtung 1 umfasst den in den Figuren 6a-6d aus verschiedenen Blickwinkeln gezeigten Vorrichtungskörper 100, der einstückig aus Kunststoff gefertigt ist und der eine Trennwand 13 mit einem peripheren Rand aufweist, an den ein gegen die Rückseite der Aufnahmevorrichtung 1 gerichtetes erstes Wandelement 11 anschliesst, das den mittels eines Deckels 19 abschliessbaren ersten Aufnahmebehälter 10 seitlich umschliesst. An den peripheren Rand der Trennwand 13 schliesst ferner ein gegen die Frontseite der Aufnahmevorrichtung 1 gerichtetes, gegebenenfalls in Segmente aufgeteiltes oder mit Ausnehmungen 121, 122, 123 versehenes zweites Wandelement 12 an, das den zweiten Aufnahmebehälter 20 begrenzt, das mit dem ersten Wandelement 11 eine gemeinsame Aussenwand bildet und das klammerförmig ausgestaltet, d.h. mit Elementen zum Halten des in den zweiten Aufnahmebehälter 20 eingesetzten Mobilendgeräts 2 versehen ist.

Figur 1a zeigt die Aufnahmevorrichtung 1 mit der Frontseite und Oberseite des Mobilendgeräts 2. Figur 1b zeigt die Oberseite der Aufnahmevorrichtung 1 und die Oberseite des Mobilendgeräts 2. Das zweite Wandelement 12 ist an der Oberseite der Aufnahmevorrichtung 1 mit einer ersten Ausnehmung 121 versehen, welche freien Zugang zur Oberseite des Mobilendgeräts 2 gewährt, an der Anschlusselemente und/oder Bedienungselemente 21 vorgesehen sind.

Figur 1c zeigt die Rückseite der Aufnahmevorrichtung 1 mit dem ersten Wandelement 11, welches an zwei parallel zueinander verlaufenden Teilen an der von der Trennwand 13 abgewandten Seite mit Führungsnuten 118a, 118b versehen ist, in die der Deckel 19 einschiebbar ist.

Die Querschnitte des ersten und des zweiten Aufnahmebehälters 10, 20 sind nicht deckungsgleich. Das erste Wandelement 11 verläuft im Bereich einer Ecke des Vorrichtungskörpers 100 innerhalb des Querschnitts der Trennwand 13, so dass ein an eine Öffnung 131 in der Trennwand 13 anschliessende Ausnehmung 111 freigehalten wird. Durch die Ausnehmung 111 kann Licht zur Öffnung 131 und somit zum dort vorgesehenen Objektiv 25 einer im Mobilendgerät 2 vorgesehenen Kamera gelangen. Der Verlauf des ersten Wandelements 11 bzw. die resultierende Ausnehmung 111 sind daher derart gewählt, dass der Lichteinfall nicht behindert wird.

Figur 1d zeigt die Aufnahmevorrichtung 1 und das Mobilendgerät 2 von der Unterseite. Das zweite Wandelement ist an dieser Seite mit einer zweiten Ausnehmung 122 versehen, so dass Zugang zu Anschlusselementen und/oder Bedienungselementen 22 an der Unterseite des Mobilendgeräts 2 gewährleistet ist.

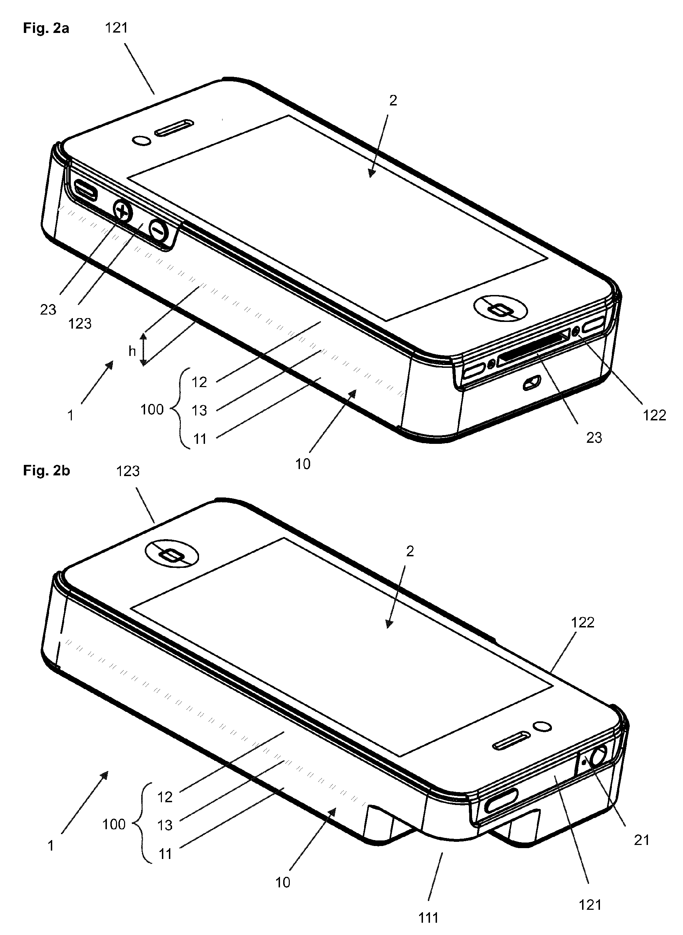

Die Figuren 2a und 2b zeigen die Aufnahmevorrichtung 1 der Figuren 1a-1d in zwei verschiedenen Lagen mit dem Mobilendgerät 2 nach oben ausgerichtet. Es ist ersichtlich, dass die Aufnahmevorrichtung 1 mit dem Mobilendgerät 2 eine kompakte Einheit bildet. Sofern die Höhe h des ersten Wandelements 11 bzw. der Tiefe des ersten Aufnahmebehälters 10 gering ist, bleibt die Kompaktheit und Handlichkeit des Mobilendgeräts 2 auch mit aufgesetzter Aufnahmevorrichtung 1 weitgehend erhalten. Es wurde bereits ausgeführt, dass die Höhe h auf ein Minimum reduziert werden kann, wenn der erste Aufnahmebehälter 10 in der Form einer Ausnehmung in den Deckel 19 integriert wird.

In Figur 2a ist eine dritte Ausnehmung 123 im zweiten Wandelement gezeigt, welche Zugriff auf weitere Anschlusselemente und/oder Bedienungselemente 23 des Mobilendgeräts 2 gewährt.

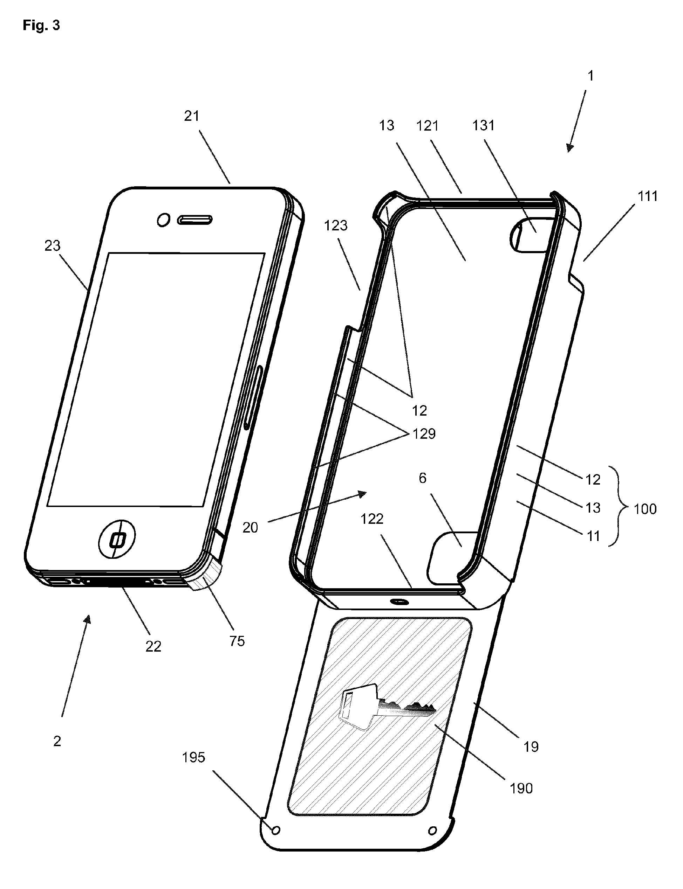

Figur 3 zeigt die Aufnahmevorrichtung 1 der Figuren 1a-1d nach der Entnahme des Mobilendgeräts 2 und mit geöffneten Deckel 19. Es ist ersichtlich, dass das zweite Wandelement 12 durch die Ausnehmungen 121, 122, 123 in drei Segmente aufgeteilt ist, die an der von der Trennwand 13 abgewandten Seite mit gegeneinander gewandten Flanschelementen 129 versehen sind. Beispielsweise ist ein Wulst oder eine Lippe 129 am Rand des zweiten Wandelements 12 angeformt.

In Figur 3 ist das Mobilendgerät 2 an den Ecken ferner mit Adapterelementen 75 versehen, mittels denen ein Zwischenraum zwischen dem Mobilendgerät 2 und dem zweiten Aufnahmebehälter 20 aufgefüllt werden kann. Mittels passender Adapterelemente 75, die vorzugsweise einen einstückigen Zwischenadapter bilden, können daher unterschiedliche Mobilendgeräte 2 an eine erfindungsgemässe Aufnahmevorrichtung 1 angepasst werden.

Innerhalb des zweiten Aufnahmebehälters 20 ist ferner ein Abschirmelement 6 auf der Trennwand 13 angeordnet, mittels dessen die Feldlinien eines magnetischen Bauteils des Mobilendgeräts 2, beispielsweise des Lautsprechers, gebündelt werden, so dass sie nicht in den Innenraum des zweiten Aufnahmebehälter 20 eindringen können. Wie dies gezeigt ist, überdeckt das Abschirmelement 6 lokal den Bereich des magnetischen Bauteils und lässt die weitere Oberfläche der Trennwand 13 frei, so dass der dortige Durchgang elektromagnetischer Strahlung nicht beeinträchtigt wird.

In Figur 3 ist weiter gezeigt, dass an der Innenseite des Deckels 19 Vertiefungen 195 vorgesehen sind, in die nachstehend beschriebene Rastelemente eingreifen können.

Besonders vorteilhaft kann eine Ausnehmung 190 an der Innenseite des Deckels 19 vorgesehen werden, die nachstehend noch näher beschrieben wird. Alternativ oder zusätzlich kann auch eine Ausnehmung vorgesehen werden, die an einen Schlüssel angepasst ist und zu dessen Aufnahme dient.

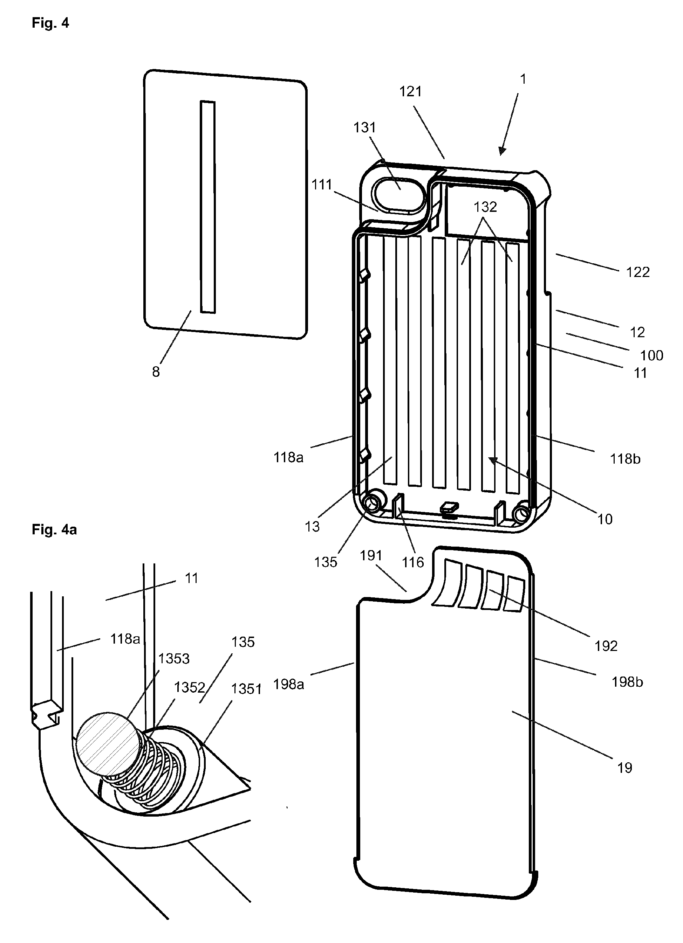

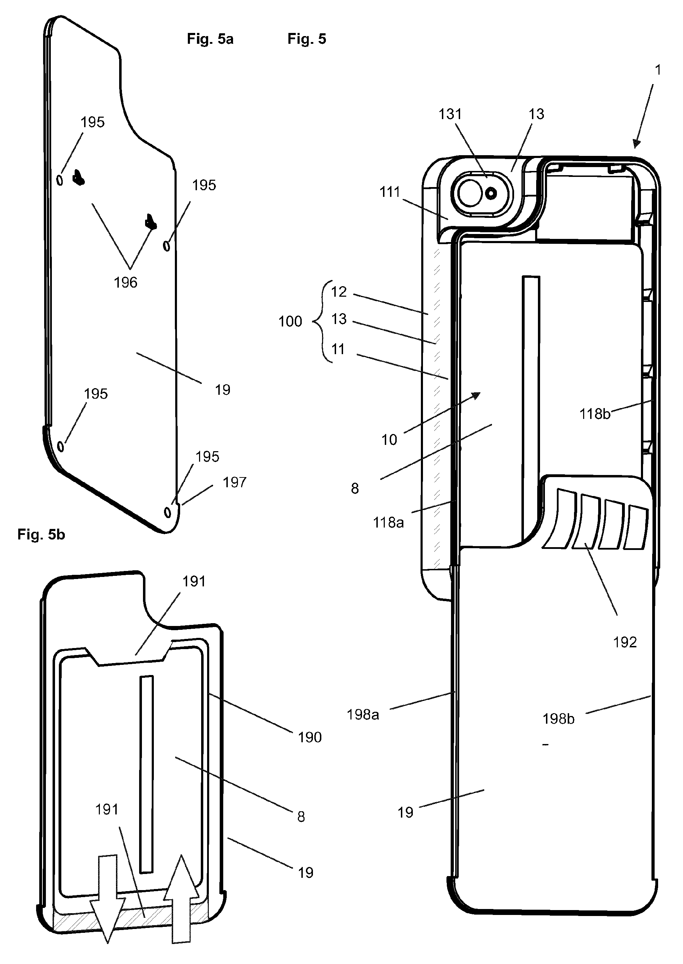

Figur 4 zeigt die Aufnahmevorrichtung 1 der Figuren 1a-1d mit Blick in den geöffneten ersten Aufnahmebehälter 10, aus dem eine Kreditkarte 8 entnommen wurde. Es ist gezeigt, dass an der Unterseite des ersten Aufnahmebehälters 10 auf beiden Seiten Rastelemente 135 vorgesehen sind, von denen eines in Figur 4a vergrössert dargestellt ist. Das Rastelement 135 umfasst einen auf der Trennwand 13 aufgesetzten Aufnahmezylinder 1351, eine darin angeordnete Spiralfeder 1352 und eine von der Spiralfeder 1352 gestützte Kugel 1353, die in korrespondierende Vertiefungen 195 an der Innenseite des Deckels 19 eingreifen kann, um diesen in den entsprechenden Öffnungspositionen zu halten. In Figur 5a ist die Innenseite eines Deckels 19 gezeigt, welcher zwei Paare von Vertiefungen 195 aufweist. In das untere Paar der Vertiefungen 195 greifen die Kugeln 1353 der Rastelemente 135 ein, wenn der Deckel 19 geschlossen ist. In das obere Paar der Vertiefungen 195 greifen die Kugeln 1353 der Rastelemente 135 ein, wenn der Deckel 19 geöffnet ist. In Figur 5a ist ferner gezeigt, dass an der Innenseite des Deckels 19 Blockierelemente 196 vorgesehen sind, die beim Herausziehen des Deckels 19 in der Endlage an Arretierleisten 116 anstossen, die am ersten Wandelement 11 angeformt sind, wie dies in Figur 4 gezeigt sind.

In Figur 4a ist ferner eine der am ersten Wandelement 11 angeformten Führungsleisten 118a gezeigt, in die je eine in Figur 4 gezeigten Randleiste 198a, 198b des Deckels 19 eingreifen kann.

In Figur 4 ist ferner gezeigt, dass der Deckel 19 eine Ausnehmung 191 aufweist, die zur Ausnehmung 111 des Vorrichtungskörpers 100 korrespondiert. Weiterhin ist gezeigt, dass die Trennwand 13 mit Rippen 132 versehen ist, die dem Halten und Ordnen von Gegenständen, beispielsweise Zigaretten, dienen, die in den ersten Aufnahmebehälter 10 eingelegt werden.

Figur 5 zeigt die Aufnahmevorrichtung 1 der Figuren 1a-1d mit einer Kreditkarte 8 im ersten Aufnahmebehälter 10 und dem Mobilendgerät 2 im zweiten Aufnahmebehälter 20. Damit der Deckel 19 einfach verschoben werden kann, ist er an der Aussenseite mit Greifelementen 192, beispielsweise Vertiefungen, versehen. Der Deckel 19 kann daher mit einem Daumen erfasst und verschoben werden.

Figur 5a zeigt den Deckel 19 mit den beschriebenen Rastelementen 195 und Blockierelementen 196.

Figur 5b zeigt eine besonders vorteilhafte Ausgestaltung des Deckels 19, der eine zu einer Kreditkarte 8 korrespondierende oder zur Aufnahme von Banknoten geeignete Ausnehmung 190 aufweist, die gegebenenfalls den ersten Aufnahmebehälter 10 bildet.

Der Deckel 19 umfasst ferner ein die Ausnehmung 190 teilweise überragendes Halteelement 191, wie eine Zunge, mittels der die Kreditkarte 8 oder Banknoten in der Ausnehmung 190 fixerbar sind und sicher gehalten werden.

Ferner weist der Deckel eine Schlitzöffnung 191 auf, durch die hindurch ein Gegenstand, wie die Kreditkarte 8 oder Banknoten, in die Ausnehmung 190 im Deckel 19 einschiebbar sind. Nach dem Herausnehmen der Kreditkarte 8 aus dem ersten Aufnahmebehälter 10 kann dieser daher wieder verschlossen werden. Nach der Benutzung der Kreditkarte 8 kann diese durch die Schlitzöffnung 191 wieder in den Aufnahmebehälter 10 eingeführt werden, ohne den Deckel 19 zu betätigen. Die Handhabung der Aufnahmevorrichtung 1 wird dadurch weiter vereinfacht.

Für bestimmte Anwender genügt es beispielsweise, nebst dem Mobilendgerät 2 eine Kreditkarte 8, eine Identitätskarte sowie Banknoten oder Schlüssel mitzuführen, weshalb nur wenig Platz benötigt wird, der durch die Ausnehmung 190 in einem entsprechend geformten Deckel 19 zur Verfügung gestellt werden kann. Die erfindungsgemässe Aufnahmevorrichtung 1 kann daher in verschiedenen Ausgestaltungen und mit verschiedenen Deckeln 19 bereitgestellt werden, um die Wünsche der Anwender zu befriedigen.

In den Figuren 6a-6d ist der Vorrichtungskörper 100 aus verschiedenen Blickwinkeln gezeigt.

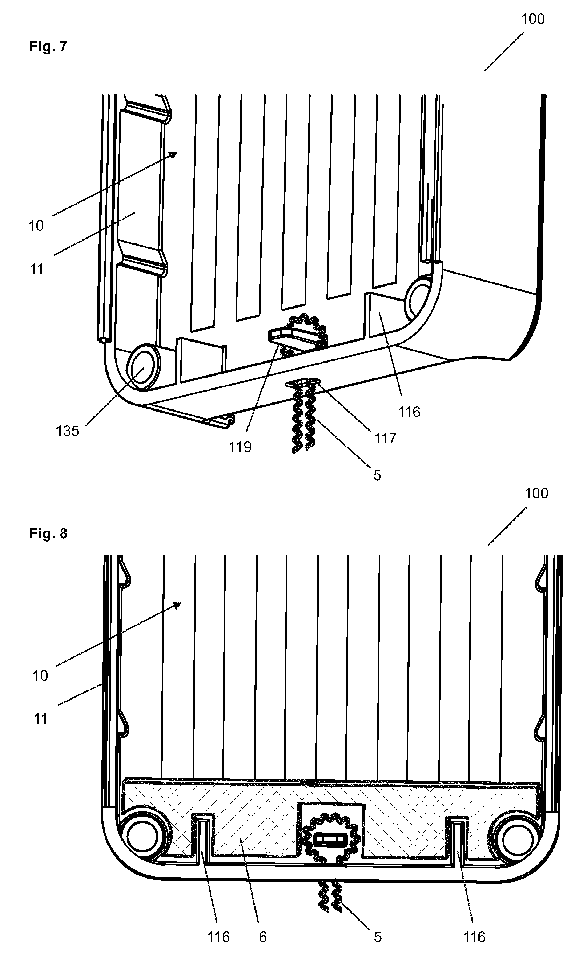

Figur 7 zeigt den Vorrichtungskörper 100 mit Blick in den ersten Aufnahmebehälter 10, in dem ein Halteelement 119 vorgesehen ist, um das ein Tragriemen 5 geschlauft ist, welcher durch eine Öffnung 117 im ersten Wandelement 11 in den ersten Aufnahmebehälter 10 eingeführt wurde. Das Halteelement 119 ist vorzugsweise stabförmig ausgestaltet und in geringem Abstand von vorzugsweise einigen Millimetern, z.B. 3mm - 10mm, von der Öffnung 117 entfernt an der Trennwand 113 angeformt. Sofern eine grössere Kraft auf den Trageriemen 5 ausgeübt wird, wird das Halteelement 119 gegen das erste Wandelement 11 gedrückt und kann nicht weiter verformt werden. Das Halteelement 119 ist daher vor Zerstörung geschützt, vorteilhaft in den ersten Aufnahmebehälter 10 integriert und nimmt dort nur wenig Raum in Anspruch. An der Aussenseite entfallen entsprechende Halteelemente, die störend in Erscheinung treten würden.

Figur 8 zeigt den Vorrichtungskörper 100 mit Blick in den ersten Aufnahmebehälter 10, in dem am unteren Ende ein elastisches Element, vorzugsweise ein Schaumstoffelement 6 angeordnet ist. Mittels des Schaumstoffelements 6, das beispielsweise mit der Trennwand 13 verklebt ist, werden eingelegte Kreditkarten 8 festgeklemmt und in Position gehalten, weshalb allfällige Beschädigungen und störende Geräusche entfallen.

## Patentansprüche

1. Aufnahmevorrichtung (1) mit einem ersten Aufnahmebehälter (10) zur Aufnahme von Nutzgegenständen, insbesondere Kreditkarten (8), und einem zweiten Aufnahmebehälter (20) zur Aufnahme eines Mobilendgeräts (2), **dadurch gekennzeichnet, dass** ein Vorrichtungskörper (100) vorgesehen ist, der einstückig aus Kunststoff gefertigt ist und der eine Trennwand (13) mit einem peripheren Rand aufweist, an den
a) ein gegen die Rückseite der Aufnahmevorrichtung (1) gerichtetes erstes Wandelement (11) anschliesst, das den ersten Aufnahmebehälter (10) seitlich umschliesst und an parallel zu einander verlaufenden Wandseiten endseitig je eine Nut (118a, 118b) zur Führung eines Deckels (19) aufweist, mittels dessen der erste Aufnahmebehälter (10) abschliessbar ist,
b) und an den ein gegen die Frontseite der Aufnahmevorrichtung (1) gerichtetes, gegebenenfalls in Segmente aufgeteiltes oder mit Ausnehmungen (121, 122, 123) versehenes zweites Wandelement (12) anschliesst, das den zweiten Aufnahmebehälter (20) begrenzt, das mit dem ersten Wandelement (11) eine gemeinsame Aussenwand bildet und das klammerförmig ausgestaltet ist.

2. Aufnahmevorrichtung (1) nach Anspruch 1, **dadurch gekennzeichnet, dass** der Vorrichtungskörper (100) aus einem elastischen, vorzugsweise schwarzen Kunststoff, vorzugsweise einem Polycarbonat oder einem AcrylnitrilButadien-Styrol-Copolymerisat gefertigt ist.

3. Aufnahmevorrichtung (1) nach Anspruch 1 oder 2, **dadurch gekennzeichnet, dass** das erste Wandelement (11) im Bereich einer Ecke des Vorrichtungskörpers (100) innerhalb des Querschnitts der Trennwand (13) verläuft, so dass ein an eine Öffnung (131) in der Trennwand (13) anschliessende Ausnehmung (111) freigehalten wird, durch die Licht zur Öffnung (131) gelangen kann.

4. Aufnahmevorrichtung (1) nach Anspruch 4, **dadurch gekennzeichnet, dass** der Deckel (19) auf der dem Vorrichtungskörper (100) zugewandten Seite eine Ausnehmung (190) aufweist, die vorzugsweise den ersten Aufnahmebehälter (10) bildet.

5. Aufnahmevorrichtung (1) nach Anspruch 4, **dadurch gekennzeichnet, dass** der Deckel (19) ein Halteelement (191), wie eine Zunge, aufweist, mittels der ein Gegenstand, wie eine Kreditkarte (8) oder Banknoten, in der Ausnehmung (190) fixerbar ist und/oder dass der Deckel (19) eine Schlitzöffnung (191) aufweist, durch die hindurch ein Gegenstand , wie eine Kreditkarte (8) oder Banknoten, in die Ausnehmung (190) einschiebbar sind.

6. Aufnahmevorrichtung (1) nach einem der Ansprüche 1 - 5, **dadurch gekennzeichnet, dass** das zweite Wandelement (12) an dem der Trennwand (13) abgewandten Ende mit Halteelementen (129), wie einem nach innen gerichteten Flansch oder einer Verdickung, versehen ist, mittels denen das Gehäuse des Mobilendgeräts (2) erfasst und gehalten werden kann.

7. Aufnahmevorrichtung (1) einem der Ansprüche 1 - 6, **dadurch gekennzeichnet, dass** die Trennwand (13) mit wenigstens einem metallischen Abschirmelement (6) versehen ist; wobei das wenigstens eine Abschirmelement (6) als Metallplatte oder Metallfolie ausgestaltet ist, welche auf der einen oder anderen Seite der Trennwand (13) angeordnet oder darin integriert ist.

8. Aufnahmevorrichtung (1) nach Anspruch 6 oder 7, **dadurch gekennzeichnet, dass** das Abschirmelement (6) an der Position des Lautsprechers des Mobilendgeräts (2) an der Trennwand (13) angeordnet und mit Abmessungen versehen ist, welche den Abmessungen des Querschnitts des Lautsprechers entsprechen oder bis zu einem Faktor 4 grösser sind.

9. Aufnahmevorrichtung (1) nach einem der Ansprüche 6 bis 8, **dadurch gekennzeichnet, dass** das Abschirmelement (6) eine weichmagnetisches Material, insbesondere eine weichmagnetische Nickel-Eisen-Legierung hoher magnetischer Permeabilität, wie Mu-Metall, ist.

10. Aufnahmevorrichtung (1) nach einem der Ansprüche 1 bis 9, **dadurch gekennzeichnet, dass** am Deckel (19) und innerhalb des ersten Aufnahmebehälters (10), vorzugsweise auf die Trennwand (13) abgestützt, zueinander korrespondierende Rastelemente (135, 195) vorgesehen sind, mittels denen der Deckel (19) in der Verschlussposition oder in der Verschlussposition und in wenigstens einer Öffnungsposition fixierbar ist.

11. Aufnahmevorrichtung (1) nach Anspruch 10, **dadurch gekennzeichnet, dass** in den Eckbereichen des Aufnahmebehälters (10) am unteren Ende des Vorrichtungskörpers (100) zylindrische Elemente (1351) vorgesehen sind, in denen je eine Spiralfeder (1352) angeordnet ist, die eine Kugel (1353) stützt, welche gegen die Unterseite des Deckels (19) angedrückt und in darin vorgesehene Ausnehmungen (195) eingreifen kann.

12. Aufnahmevorrichtung (1) nach Anspruch 11, **dadurch gekennzeichnet, dass** der Deckel (19) an der Unterseite mit Blockierelementen (196) versehen ist, welche mit Anschlagsleisten (196) zusammenwirken, welche im Bereich der zylindrischen Elemente (1351) innerhalb des Aufnahmebehälters (10) angeordnet sind.

13. Aufnahmevorrichtung (1) nach einem der Ansprüche 1 bis 12, **dadurch gekennzeichnet, dass** die Trennwand (13)
a) mit parallel zur Seitenwand verlaufenden Rippen (132) versehen ist, und/oder
b) in einem Abstand von 3mm - 10mm von einer Öffnung (117) im ersten Wandelement (111) mit einem Halteelement (119) versehen ist, welches dem Halten einer durch die Öffnung (117) eingeführten Schlaufe (5) dient, und/oder
c) vorzugsweise an der Unterseite mit einem elastischen Element (6) verbunden ist.

14. Aufnahmevorrichtung (1) nach einem der Ansprüche 1 bis 13, **dadurch gekennzeichnet, dass** die Höhe des ersten Wandelements (11) im Bereich von 3mm bis 15mm liegt.

15. Aufnahmevorrichtung (1) nach einem der Ansprüche 1 bis 14, **dadurch gekennzeichnet, dass** ein einteiliger oder mehrteiliger Zwischenadapter (75) aus Kunststoff vorgesehen, der an der Aussenseite an den zweiten Aufnahmebehälter und an der Innenseite an das Mobilendgerät angepasst ist.
